# DEMANDE DE BREVET EUROPEEN

(11) **EP 3 489 125 A1**
(43) Date de publication de la demande: **29.05.2019**
(21) Numéro de dépôt: 18208942.5
(22) Date de dépôt: 19.03.2015
(51) Int. Cl.: B63B 21/50, E21B 19/00, B63B 21/00

(54) **LIGNE D'ANCRAGE POUR SUPPORT FLOTTANT COMPRENANT UN DISPOSITIF ELASTIQUE**

(30) Priorité: 07.04.2014 FR 1453074
(62) Demande divisionnaire de: 15711157.6
(71) Demandeur: IFP Energies nouvelles, 92852 Rueil-Malmaison Cedex (FR); Techlam S.A., 68701 Cernay (FR)
(72) Inventeur: POIRETTE, Yann, 38121 REVENTIN-VAUGRIS (FR); AVERBUCH, Daniel, 69390 VERNAISON (FR); BUFFY, Stéphane, 68530 MURBACH (FR); SKRABER, Alain, 68500 BERRWILLER (FR)
(74) Mandataire: IFP Energies nouvelles

(57) **Abrégé**

L'invention concerne les systèmes d'ancrage de supports flottants (1) pour la production d'énergie en mer (éolienne flottante, énergie des vagues, hydroliennes flottantes, plate-forme ETM...) et/ou pour l'exploitation pétrolière en mer, constitués d'au moins une ligne d'ancrage comprenant au moins un tronçon (2) constitué de câble, de chaine ou d'une combinaison des deux et au moins un dispositif élastique (3).

## Description

La présente invention concerne le domaine de l'ancrage des supports flottants, notamment pour les applications pétrolières offshore et/ou des applications du domaine des énergies marines renouvelables, en particulier pour les supports flottants destinés aux éoliennes.

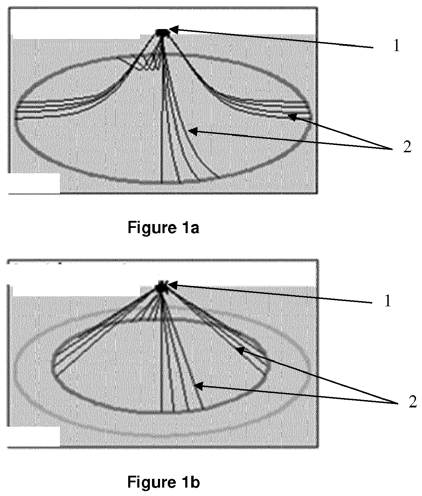

Le système d'ancrage d'un support flottant a pour fonction principale de maintenir le support en position lorsque ce dernier est soumis aux efforts de vent, du courant et de la houle. Pour réaliser cette fonction, il existe plusieurs familles d'ancrage (par exemple, "single point mooring" : ancrage en un seul point et "spread mooring" : ancrage multipoints) et types d'ancrage qui vont de l'ancrage plus ou moins tendu (par exemple, "taut" : tendu et "semi-taut mooring" : ancrage semi tendu) à l'ancrage caténaire. La figure 1a illustre un exemple d'ancrage caténaire pour l'ancrage d'un support flottant 1 par plusieurs lignes d'ancrage 2. La figure 1b, quant à elle, représente un exemple d'ancrage tendu pour l'ancrage du support flottant 1 par plusieurs lignes d'ancrage 2 tendues.

Les lignes d'ancrage sont constituées de chaînes, de câbles métalliques, notamment en acier, de câbles synthétiques ou d'une combinaison de chaînes et de câbles. Le choix du type d'ancrage et du matériau dépend du site (conditions environnementales et profondeur d'eau) et de la fonction du support flottant (production, forage, éolienne...).

Les lignes d'ancrage sont soumises à des sollicitations importantes liées notamment au vent, au courant et à la houle, ces sollicitations peuvent générer des risques de rupture par fatigue des lignes d'ancrage. De plus, ces phénomènes naturels entraînent le déplacement du support flottant. Par conséquent, les lignes d'ancrage doivent présenter une bonne résistance aux efforts induits et doivent permettre un mouvement limité du support flottant.

Afin d'adapter la raideur des lignes d'ancrage pour la gestion des grands efforts et la gestion de la fin de course, les demandes de brevet WO 2011/033114 et WO 2012/127015 proposent d'insérer dans une ligne d'ancrage un élément déformable de raideur variable en fonction de l'effort. Toutefois, les éléments déformables amortissant, travaillant en traction, décrits dans ces documents sont peu adaptés à la reprise d'efforts importants, encombrants et complexes.

L'invention concerne les systèmes d'ancrage de supports flottants pour la production d'énergie en mer (éolienne flottante, énergie des vagues, hydroliennes flottantes, plate-forme ETM...) et/ou pour l'exploitation pétrolière en mer, constitués d'au moins une ligne d'ancrage comprenant au moins un tronçon constitué de câble, de chaine ou d'une combinaison des deux et au moins un dispositif élastique permettant de diminuer la raideur de la ligne et de reprendre une partie de la déformation de la ligne sous l'effet des efforts de vents, de la houle et du courant sur le support flottant. L'invention permet de réduire les charges dans le tronçon et au niveau des points d'accroche de la ligne d'ancrage.

### Le dispositif selon l'invention

L'invention concerne une ligne d'ancrage pour support flottant comprenant au moins un dispositif élastique. Ledit dispositif élastique comprend :
- un premier élément rigide,
- un deuxième élément rigide, en mouvement de translation rectiligne par rapport audit premier élément rigide, et
- une pluralité d'éléments élastiques insérée entre ledit premier élément rigide et ledit deuxième élément rigide, ladite pluralité d'éléments élastiques travaillant en compression et étant disposée en série entre des plaques.

De manière préférentielle, ledit élément élastique est en élastomère.

De manière avantageuse, ledit élément élastique est adhérisé à au moins un insert métallique ou composite.

Selon l'invention, la raideur dudit dispositif élastique est comprise entre 1 et 60 MN/m

Avantageusement, ladite ligne d'ancrage comprend une chaîne ou un câble solidaire dudit deuxième élément rigide.

Selon un mode de mise en oeuvre de l'invention, ledit premier élément rigide est fixé sur ledit support flottant.

De préférence, l'extrémité de ladite ligne d'ancrage liée au deuxième élément rigide est orientée au moyen d'un renvoi d'angle.

Alternativement, ledit premier élément rigide est solidaire d'une chaîne ou d'un câble fixé au support flottant.

De préférence, ledit deuxième élément rigide est une plaque liée à une tige.

Avantageusement, ledit premier élément rigide est une plaque.

Selon un mode de réalisation, ladite ligne d'ancrage comprend une combinaison en série entre un premier dispositif élastique travaillant en cisaillement et un second dispositif élastique travaillant en compression.

En outre, l'invention concerne une utilisation d'une ligne d'ancrage selon l'invention, pour l'ancrage d'une éolienne disposée sur un support flottant, d'une plateforme de production ou de forage pour la récupération d'hydrocarbures, d'une bouée, d'une barge flottante.

De préférence, ladite ligne d'ancrage est tendue.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
Les figures 1a et 1b, déjà décrites, illustrent un exemple de d'ancrage caténaire et d'ancrage tendu selon l'art antérieur.
Les figures 2a et 2b illustrent des systèmes d'ancrage selon des modes de réalisation de l'invention.
La figure 3 représente un dispositif élastique selon un deuxième mode de réalisation de l'invention

### Description de modes de réalisation de l'invention

La présente invention concerne les systèmes d'ancrage de supports flottants pour la production d'énergie en mer et/ou pour l'exploitation pétrolière en mer, constitués d'au moins une ligne d'ancrage comprenant au moins un tronçon constitué de câble, de chaine ou d'une combinaison des deux et au moins un dispositif élastique permettant de diminuer la raideur de la ligne et de reprendre une partie de la déformation de la ligne sous l'effet des efforts de vent, de la houle et du courant sur le support flottant. L'invention permet de réduire les efforts dans le tronçon et au niveau des points d'accroche des lignes d'ancrage.

Selon l'invention, le dispositif élastique comprend au moins :
- une pièce rigide solidaire d'un premier tronçon de la ligne d'ancrage ou du support flottant, et
- une seconde pièce rigide solidaire d'un deuxième tronçon de la ligne d'ancrage ou du tronçon de la ligne d'ancrage, la seconde pièce rigide étant apte à coulisser par rapport à la première pièce rigide,
- un élément élastique inséré entre les deux pièces rigides, permettant le mouvement coulissant de l'une par rapport à l'autre.

Les pièces rigides peuvent être réalisées en métal ou en matière composite. La liaison coulissante entre les deux pièces rigides permet une translation de l'une par rapport à l'autre.

On appelle élément élastique, un élément apte à se déformer (par exemple par allongement) lorsqu'il est soumis à un effort et à retrouver sa forme initiale lorsque l'on supprime l'effort responsable de la déformation. Par ailleurs, le terme rigide désigne un élément qui ne se déforme pas ou peu, relativement à l'élément élastique, lorsqu'il est soumis à un effort (c'est le cas par exemple des pièces métalliques). L'élément élastique étant disposé entre les deux pièces rigides, le mouvement de l'une par rapport à l'autre sous l'action d'un effort entraîne la déformation de l'élément élastique. Ainsi, le dispositif élastique contribue à la diminution de la raideur de la ligne d'ancrage et par sa déformation permet de reprendre une partie de la déformation de la ligne d'ancrage sous l'effet des efforts des vents, de la houle et du courant sur le support flottant. Ainsi, le câble ou la chaine constituant le tronçon de la ligne d'ancrage est moins sollicité (effort et déformation).

On appelle tronçon de la ligne d'ancrage, un morceau de câble ou de chaîne ou une combinaison de câble et chaine. Le câble constituant le tronçon peut être réalisé en matière synthétique ou en métal, notamment en acier. Un tronçon de ligne d'ancrage peut par exemple assurer la liaison entre le support flottant et le dispositif élastique d'une part et le dispositif élastique et le fond marin d'autre part. Un tronçon de ligne d'ancrage peut également assurer la liaison entre deux dispositifs élastiques insérés dans la ligne d'ancrage

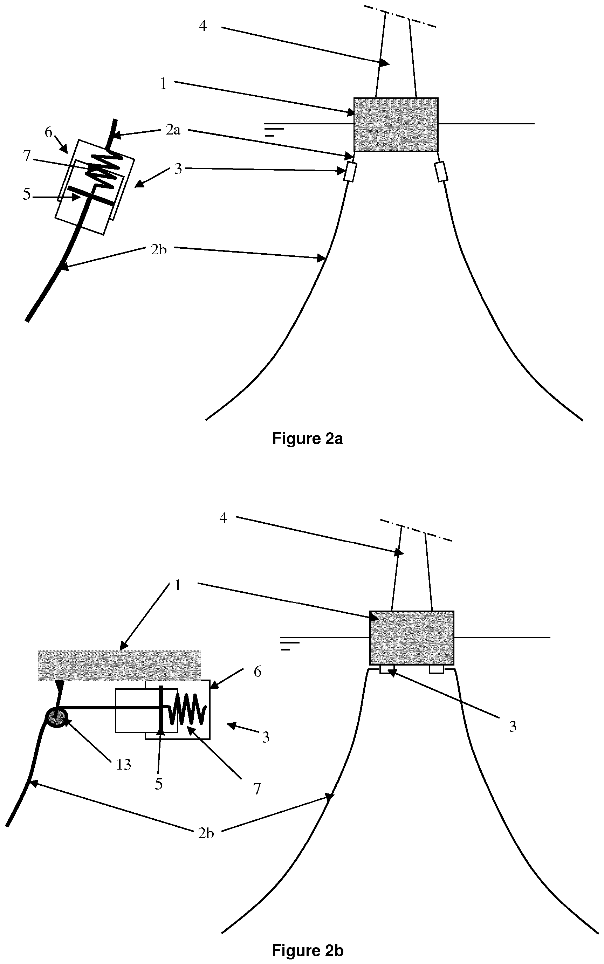

Plusieurs emplacements du dispositif élastique dans la ligne d'ancrage peuvent être envisagés : au sein de la ligne d'ancrage (cf. figure 2a), fixé sur le support flottant (cf. figure 2b).

La figure 2a représente un système d'ancrage d'un support flottant 1 d'une éolienne 4 ("offshore") avec des lignes d'ancrage 2 selon un mode de mise en oeuvre de l'invention. Les lignes d'ancrage 2 permettent l'ancrage du support flottant 1 sur le fond marin. Chaque ligne d'ancrage 2 comporte au moins un dispositif élastique 3 et deux tronçons de ligne 2a et 2b constitués de câble ou de chaine ou d'une combinaison des deux. Le premier tronçon 2a relie le support flottant 1 à la première pièce rigide 6 du dispositif élastique 3. Le second tronçon 2b relie la deuxième pièce rigide 5 du dispositif élastique 3 au fond marin. L'élément élastique 7 est inséré entre les pièces rigides 5 et 6 du dispositif élastique 3.

Selon un mode de mise en oeuvre de l'invention, la première pièce rigide 6 peut être directement accrochée au support flottant sans l'intermédiaire du tronçon 2a en maintenant le mouvement coulissant entre les deux pièces rigides 5 et 6 du dispositif élastique 3 suivant l'axe du tronçon 2b.

Selon une variante de cette mise en oeuvre de l'invention, le mouvement coulissant entre les deux pièces rigides 5 et 6 peut être dans le plan du support flottant (sensiblement horizontal). La figure 2b représente un système d'ancrage d'un support flottant 1 d'une éolienne 4 ("offshore") avec des lignes d'ancrage 2 selon cette variante de réalisation. Chaque ligne d'ancrage 2 comporte au moins un dispositif élastique 3 et un tronçon de ligne 2b constitué de câble ou de chaine ou d'une combinaison des deux. La pièce rigide 6 du dispositif élastique est accrochée au support flottant 1 et la pièce rigide 5 est reliée à une extrémité du tronçon 2b de sorte que le mouvement coulissant entre les pièces rigides 5 et 6 s'opère dans un plan parallèle au pont du support 1. Un composant 13 de type poulie accroché au support flottant 1 assure le renvoi d'angle du tronçon 2b vers le fond marin. Le composant 13 permet un renvoi d'angle de la ligne d'ancrage. Ainsi la chaîne/ou le câble est d'abord sensiblement parallèle au support flottant 1, puis après passage dans le composant 13, la chaine ou le câble descend vers l'ancrage.

Alternativement, le composant 13 peut se déplacer par rapport au support flottant 1.

Selon un mode de réalisation, le dispositif élastique comprend au moins un élément élastique travaillant essentiellement en compression. Ce mode de réalisation peut être intéressant si le niveau des efforts des vents, de la houle et du courant, ne peut pas être repris par un composant travaillant en cisaillement

Le dispositif élastique peut comprendre une pluralité d'éléments élastiques montés en parallèle ou en série.

L'élément élastomère peut être adhérisée sur au moins une des pièces rigides. Cette structure multicouche permet de maîtriser les caractéristiques mécaniques pour créer une liaison flexible adaptée au besoin.

La raideur du dispositif élastique est choisie dans une gamme comprise entre 1 et 60 MN/m.

Le dispositif élastique est dimensionné de manière à être suffisamment souple pour réduire avantageusement les efforts dans la ligne d'ancrage, notamment au niveau de la fixation sur le support flottant. Par ailleurs, le dispositif élastique est dimensionné de manière à être suffisamment rigide pour maintenir son allongement dans les limites de sa conception : l'allongement maximum peut être sensiblement de 500 %.

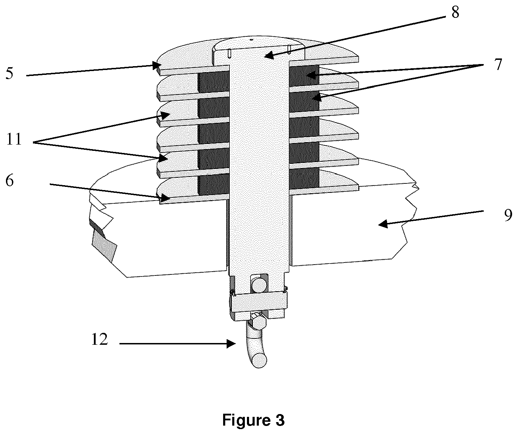

La figure 3 présente un dispositif élastique 3 selon un mode de réalisation de l'invention. Il s'agit d'un dispositif élastique 3 comprenant une pluralité d'éléments élastiques 7 travaillant en compression disposés en série. Selon le mode de réalisation illustré, le dispositif élastique comprend cinq éléments élastiques 7. Les éléments élastiques 7 sont disposés entre la tête de la tige 8 (liée à la ligne d'ancrage), du côté opposé à une liaison de type « maillon » 12 et le support flottant 9. Une plaque supérieure 5, formant le deuxième élément rigide 5 est liée à la tige 8. Une plaque inférieure 6, formant le premier élément rigide 6 est fixée au support flottant. Entre les éléments élastiques 7 sont insérées des plaques rigides 11. Lorsqu'un effort est appliqué sur le dispositif élastique 3, la tige 8 se déplace axialement par rapport au support flottant 9 et l'effort est transmis à tous les éléments élastiques 7 qui se déforment simultanément.

Le mode de réalisation de la figure 3 n'est pas limitatif, d'autres variantes de réalisation peuvent être mises en oeuvre :, le dispositif élastique 3 de la figure 3 peut comprendre entre plusieurs éléments élastiques en série, des éléments élastiques peuvent être placés en parallèle des éléments élastiques de la figure 3, par exemple avec des moyens élastiques en forme d'anneaux coaxiaux avec les éléments élastiques 7...

L'un des avantages de la ligne d'ancrage selon l'invention est notamment de pouvoir être dimensionnée facilement par combinaison en série ou en parallèle de dispositifs élastiques. Par exemple, une combinaison en série entre un premier dispositif élastique travaillant en cisaillement et un second travaillant en compression peut être envisagée afin d'obtenir un bon compromis permettant un allongement important sous effort faible et une résistance élevée aux efforts maximum.

De préférence, le dispositif élastique est disposé sur la ligne d'ancrage à proximité du support flottant étant donné que les efforts de tension en haut de la ligne d'ancrage sont plus importants qu'en bas de la ligne d'ancrage. De plus, cette configuration permet de faciliter l'accès à celui-ci pour son inspection et sa maintenance, même si cette dernière peut être réduite du fait de l'utilisation de composant à déformation élastique.

La ligne d'ancrage selon l'invention peut être utilisée notamment pour l'ancrage d'une éolienne flottante ("offshore"), d'une plateforme de production ou de forage pour la récupération d'hydrocarbures, d'une bouée, d'une barge flottante ou de tout autre moyen flottant nécessitant un ancrage.

L'ancrage peut être du type caténaire, tendu ou semi-tendu.

## Revendications

1. Ligne d'ancrage pour support flottant (1) comprenant au moins un dispositif élastique (3), **caractérisée en ce que** ledit dispositif élastique (3) comprend :
- un premier élément rigide (6),
- un deuxième élément rigide (5), en mouvement de translation rectiligne par rapport audit premier élément rigide (6), et
- une pluralité d'éléments élastiques (7) insérée entre ledit premier élément rigide (6) et ledit deuxième élément rigide (5), ladite pluralité d'éléments élastiques travaillant en compression et étant disposée en série entre des plaques (11).

2. Ligne d'ancrage selon la revendication 1, dans laquelle ledit élément élastique (7) est en élastomère.

3. Ligne d'ancrage selon l'une des revendications précédentes, dans laquelle ledit élément élastique (7) est adhérisé à au moins un insert (5, 6,11) métallique ou composite.

4. Ligne d'ancrage selon l'une des revendications précédentes, dans laquelle la raideur dudit dispositif élastique (3) est comprise entre 1 et 60 MN/m.

5. Ligne d'ancrage selon l'une des revendications précédentes, dans laquelle ladite ligne d'ancrage comprend une chaîne ou un câble (2) solidaire dudit deuxième élément rigide (5).

6. Ligne d'ancrage selon l'une des revendications précédentes, dans laquelle ledit premier élément rigide (6) est fixé sur ledit support flottant (1).

7. Ligne d'ancrage selon la revendication 6, dans laquelle l'extrémité de ladite ligne d'ancrage liée au deuxième élément rigide (5) est orientée au moyen d'un renvoi d'angle (13).

8. Ligne d'ancrage selon l'une des revendications 1 à 5, dans laquelle ledit premier élément rigide (6) est solidaire d'une chaîne ou d'un câble (2) fixé au support flottant (1).

9. Ligne d'ancrage selon l'une des revendications précédentes, dans laquelle ledit deuxième élément rigide (5) est une plaque liée à une tige (8).

10. Ligne d'ancrage selon l'une des revendications précédentes, dans laquelle ledit premier élément rigide (6) est une plaque.

11. Ligne d'ancrage selon la revendication 10, dans laquelle ladite plaque dudit premier élément rigide est fixé au support flottant (9).

12. Ligne d'ancrage selon l'une des revendications précédentes, comprenant une combinaison en série entre un premier dispositif élastique travaillant en cisaillement et un second dispositif élastique travaillant en compression.

13. Utilisation d'une ligne d'ancrage (2) selon l'une des revendications précédentes, pour l'ancrage d'un support flottant (1) pour la production d'énergie en mer, d'une plateforme de forage ou de production d'hydrocarbures, d'une bouée, d'une barge flottante.

14. Utilisation selon la revendication 13, pour laquelle ladite ligne d'ancrage (2) est tendue.
